# EUROPÄISCHE PATENTSCHRIFT

(11) **EP 4 174 463 B1**
(45) Veröffentlichungstag und Bekanntmachung des Hinweises auf die Patenterteilung: **12.06.2024**
(21) Anmeldenummer: 22195685.7
(22) Anmeldetag: 14.09.2022
(51) Int. Cl.: G01L 3/10, G01D 5/14, G01D 5/244

(54) **SYSTEM ZUR ERFASSUNG VON DREHMOMENT UND DREHWINKEL**
TORQUE AND ANGLE DETECTING SYSTEM
SYSTÈME DE DÉTECTION DU COUPLE ET DE L'ANGLE DE ROTATION

(30) Priorität: 28.10.2021 EP 21205296
(43) Veröffentlichungstag der Anmeldung: 03.05.2023
(73) Patentinhaber: Kistler Holding AG, 8408 Winterthur (CH)
(72) Erfinder: Tepsic, Stanko, 73614 Schorndorf (DE); Roshau, Alexander, 70173 Stuttgart (DE); Waibel, Tobias, 73614 Schorndorf (DE)

(56) Entgegenhaltungen:
- CH-A1- 710 404
- CN-A- 108 627 293
- JP-B2- 5 024 648
- US-A1- 2016 276 871
- US-A1- 2018 058 969

## Beschreibung

### Technisches Gebiet

Die Erfindung betrifft ein System zur Erfassung von Drehmoment und Drehwinkel nach dem Oberbegriff des unabhängigen Anspruches.

### Stand der Technik

In der industriellen Messtechnik werden physikalische Grössen wie Drehmoment, Drehwinkel usw. an industriell hergestellten Produkten erfasst. So werden in der Prüfstandstechnik das Drehmoment und der Drehwinkel an sich drehenden Teilen wie Verbrennungsmotoren, Elektromotoren, Getrieben, Pumpen, usw. erfasst. Aber auch bei der spanenden Bearbeitung von Werkstücken werden das Drehmoment und der Drehwinkel an sich drehenden Teilen erfasst. US2018/058969A1, CN108627293A und CH710404A1 offenbaren Systeme zur Erfassung von Drehmoment und Drehwinkel.

Für die Erfassung von Drehmoment und Drehwinkel vertreibt die Anmelderin ein als KiTorq bezeichnetes und im Datenblatt 4550A_000-880d-08.20 dokumentiertes System. Für die Belange der vorliegenden Erfindung bildet KiTorq den Stand der Technik. KiTorq weist eine Rotoreinheit und eine Statoreinheit auf. Die Rotoreinheit ist als Flansch ausgeführt und lässt sich über eine Schraubverbindung an beliebigen Drehteilen befestigen. Die Rotoreinheit ist für Umdrehungszahlen von bis zu 20000min⁻¹ ausgelegt. Die Statoreinheit hingegen ist ortsfest angeordnet. Sie ist bezüglich einer Drehachse durch einen radialen Luftspalt von der Rotoreinheit getrennt.

Die Rotoreinheit weist Dehnungsmessstreifen auf. Die Dehnungsmessstreifen umfassen ein Messgitter und eine Brückenschaltung. Wenn am Messgitter eine elektrische Spannung angelegt wird, weist das Messgitter einen elektrischen Widerstand auf. Bei Dehnung oder Stauchung des Messgitters ändert sich der elektrische Widerstand, welche Änderung des elektrischen Widerstandes in der Brückenschaltung Messsignale erzeugt. Die Dehnungsmessstreifen erfassen so das Drehmoment, welches auf die Rotoreinheit wirkt. Die Dehnungsmessstreifen erfassen das Drehmoment dynamisch und erzeugen bis zu 10000 Messsignale pro Sekunde bei einer Abtastrate von bis zu 35kSample. Die Messsignale haben eine Auflösung von 24Bit.

Die Rotoreinheit weist mehrere Dipolmagnete auf, welche zueinander beabstandet angeordnet sind. Die Statoreinheit weist einen Magnetfeldsensor auf, welcher bei sich drehender Rotoreinheit die Magnetfelder der Dipolmagnete misst. Durch Zählen der gemessenen Magnetfelder und bei Kenntnis des Abstandes der Dipolmagnete zueinander ermittelt das System den von der Rotoreinheit zurückgelegten Drehwinkel.

Um die Messsignale von der Rotoreinheit zur Statoreinheit zu übertragen, weist die Rotoreinheit eine Rotorantenne auf und die Statoreinheit weist eine Statorantenne auf. Die Messignale werden berührungslos übertragen, in dem die Rotorantenne die Messsignale an die Statorantenne sendet. Dazu wird im Industrial Scientific and Medical (ISM)-Band die Sendefrequenz von 13.56MHz verwendet und eine Datenübermittlungsrate von bis zu 1.4Mbitsec⁻¹ erreicht.

Um die Dehnungsmessstreifen und die Rotorantenne zu betreiben, muss die Rotoreinheit mit elektrischer Energie versorgt werden. Dazu weist die Statoreinheit eine Primärspule und die Rotoreinheit weist eine Sekundärspule auf. Die Primärspule und die Sekundärspule sind induktiv miteinander gekoppelt. Eine elektrische Primärspannung in der Primärspule bewirkt eine elektrische Sekundärspannung in der Sekundärspule. Die induktive Kopplung der Primärspule mit der Sekundärspule ist berührungslos und erfolgt im ISM-Band mit Trägerfrequenzen im Bereich von 115kHz bis 130kHz.

Die Dipolmagnete bestehen aus einem magnetisierten Ferritpulver/Kautschuk-Gemisch. Die Remanenz der Dipolmagnete ist mit kleiner 200mT relativ schwach. Eine solch schwache Remanenz kann einfach durch äussere Magnetfelder gestört werden und somit die Ermittlung des Drehwinkels verfälschen.

Für die induktive Kopplung weist die Sekundärspule ein Eisenpulver/Harz-Gemisch auf. Das Eisenpulver/HarzGemisch lässt sich rasch anrühren und mit einem Spachtel einfach auf der Rotoreinheit in einer gekrümmten Form anbringen, wo es rasch aushärtet. Insbesondere lässt sich ein und dasselbe Eisenpulver/Harz-Gemisch für Rotoreinheiten mit unterschiedlich grossen Krümmungsradien verwenden. Das Eisenpulver/Harz-Gemisch ermöglicht somit eine kostengünstige Fertigung mit hoher Variabilität. Jedoch enthält das frisch angerührte Eisenpulver/Harz-Gemisch Lufteinschlüsse, welche auch nach dem Aushärten des Eisenpulver/Harz-Gemisches bestehen bleiben und eine geringe magnetische Permeabilität zur Folge haben. Dadurch weist die induktive Kopplung der Primärspule mit der Sekundärspule einen niedrigen Wirkungsgrad auf.

Aus diesen Gründen müssen die Dipolmagnete und der Magnetfeldsensor sowie die Primärspule und die Sekundärspule nahe beieinanderstehen. Der radiale Luftspalt zwischen Statoreinheit und Rotoreinheit beträgt lediglich 1.0mm und muss eine enge radiale Luftspalttoleranz von +/-0.5mm einhalten. Um die enge radiale Luftspalttoleranz einzuhalten, wird die Rotoreinheit mit einer Wuchtgüte nach DIN ISO 1940-1 von G 2.5 gefertigt, was jedoch die Fertigung von KiTorq aufwändig und teuer macht.

Auch passiert es oft, dass nachdem die Rotoreinheit an einem sich drehenden Teil befestigen ist, dann neben dem sich drehenden Teil nicht ausreichend Platz vorhanden ist, um die Statoreinheit so neben der Rotoreinheit zu montieren, dass der Magnetfeldsensor in nächster Nähe zu den Dipolmagneten zu liegen kommt. Je weiter aber der Magnetfeldsensor von den Dipolmagneten entfernt ist, desto fehlerbehafteter ist die Messung der Magnetfelder der Dipolmagnete durch den Magnetfeldsensor, was die Ermittlung des Drehwinkels verfälschen kann.

Eine erste Aufgabe der vorliegenden Erfindung ist es, ein System zur Erfassung von Drehmoment und Drehwinkel bereitzustellen, mit einer Rotoreinheit und einer Statoreinheit, welche Rotoreinheit und welche Statoreinheit bezüglich einer Drehachse durch einen radialen Luftspalt voneinander getrennt sind, welcher Luftspalt grösser als derjenige aus dem Stand der Technik gemäss KiTorq ist und welcher Luftspalt eine weitere Toleranz als derjenige aus dem Stand der Technik gemäss KiTorq aufweist.

Es ist eine zweite Aufgabe der Erfindung, ein System zur Erfassung von Drehmoment und Drehwinkel aufzuzeigen, dessen Erfassung des Drehwinkels nicht einfach durch äussere Magnetfelder gestört werden kann.

Und als dritte Aufgabe der Erfindung wird nach einem System zur Erfassung von Drehmoment und Drehwinkel gesucht, dessen Fertigung kostengünstiger als dasjenige aus dem Stand der Technik gemäss KiTorq ist.

Schliesslich stellt sich die Erfindung die vierte Aufgabe, ein System zur Erfassung von Drehmoment und Drehwinkel zu liefern, bei dem sich die Statoreinheit einfach und rasch neben der Rotoreinheit montieren lässt, damit der Magnetfeldsensor in nächster Nähe zu den Dipolmagneten zu liegen kommt.

### Darstellung der Erfindung

Zumindest eine dieser Aufgaben wird durch die Merkmale des unabhängigen Anspruches gelöst.

Die Erfindung betrifft ein System zur Erfassung von Drehmoment und Drehwinkel; mit einer Rotoreinheit, welche um eine Drehachse drehbar ist; mit einer Statoreinheit, welche ortsfest angeordnet ist und durch einen bezüglich der Drehachse radialen Luftspalt von der Rotoreinheit getrennt ist; wobei die Rotoreinheit Dehnungsmessstreifen aufweist, welche ein Drehmoment erfassen, welches auf die Rotoreinheit wirkt; wobei die Rotoreinheit mehrere Dipolmagnete aufweist, welche zueinander beabstandet angeordnet sind; wobei die Statoreinheit einen Magnetfeldsensor aufweist, welcher bei sich drehender Rotoreinheit die Magnetfelder der Dipolmagnete misst; wobei die Statoreinheit eine Primärspule und die Rotoreinheit eine Sekundärspule aufweist; wobei eine elektrische Primärspannung in der Primärspule eine elektrische Sekundärspannung in der Sekundärspule bewirkt; wobei jeder der Dipolmagnete eine Remanenz grösser/gleich 1000mT, vorzugsweise grösser/gleich 1400mT aufweist; und wobei die Sekundärspule mehrere Ferritelemente aufweist.

Erfindungsgemäss weisen die Dipolmagnete der Rotoreinheit eine starke Remanenz auf. Im Vergleich mit dem magnetisierten Ferritpulver/Kautschuk-Gemisch der Dipolmagnete gemäss KiTorq ist die Remanenz der erfindungsgemässen Dipolmagnete zumindest fünfmal grösser. Aufgrund dieser starken Remanenz kann der Magnetfeldsensor der Statoreinheit die Magnetfelder der Dipolmagnete aus einer grösseren Distanz messen. Auch lässt sich eine solch starke Remanenz nicht so einfach durch äussere Magnetfelder stören.

Ferritelemente bestehen aus sehr reinen Eisen-Sauerstoffverbindungen, welche bei hohem Druck gleichmässig zu Presslingen verpresst sind. Ferritelemente kennzeichnen sich somit durch einen grossen Anteil an magnetischem Material auf und sind hochverdichtet. Deshalb weisen Ferritelemente eine hohe Permeabilität auf. Im Vergleich mit dem Eisenpulver/Harz-Gemisch gemäss KiTorq erzielen die Ferritelemente dann auch einen verbesserten Wirkungsgrad der induktiven Kopplung zwischen der Primärspule und der Sekundärspule. Und wegen des verbesserten Wirkungsgrades kann die induktive Kopplung über eine grössere Distanz stattfinden.

Somit hat die Kombination von Dipolmagneten mit starker Remanenz und von Ferritelementen in der Sekundärspule des erfindungsgemässen Systems die synergetische Wirkung, dass sich der radiale Luftspalt von der Rotoreinheit zur Statoreinheit vergrössern lässt, und dass sich auch die zulässige radiale Luftspalttoleranz erweitern lässt.

Zudem sind Ferritelemente kostengünstig in der Anschaffung, was die Fertigung des Systems kostengünstig macht.

Bevorzugte Ausführungsformen des Systems zur Erfassung von Drehmoment und Drehwinkel sind in den abhängigen Ansprüchen formuliert.

In einer bevorzugten Ausführungsform des Systems ist der radiale Luftspalt grösser/gleich 2.0mm und weist eine radiale Luftspalttoleranz von +/-1.5mm auf.

Im Vergleich mit dem System zur Erfassung von Drehmoment und Drehwinkel aus Stand der Technik gemäss KiTorq ist der radiale Luftspalt nun zumindest doppelt so gross und dessen zulässige radiale Luftspalttoleranz ist sogar dreimal so gross.

In einer bevorzugten Ausführungsform des Systems weist die Rotoreinheit einen Rotorkörper und mehrere Sacklöcher auf, welche Sacklöcher aussenseitig am Rotorkörper angebracht sind; und wobei die Ferritelemente in den Sacklöchern befestigt sind.

Eine solche Befestigung der Ferritelemente in Sacklöchern ist einfach zu bewerkstelligen, was die Fertigung des Systems kostengünstig macht.

In einer bevorzugten Ausführungsform des Systems erfolgt die Befestigung der Ferritelemente in den Sacklöchern durch Formschluss.

In einer bevorzugten Ausführungsform des System weist jedes Sackloch einen Innenraum auf, welcher Innenraum mindestens eine Innenfläche aufweist; wobei jedes Ferritelement mindestens eine Aussenfläche aufweist; und wobei die Innenfläche und die Aussenfläche von der Grösse passend gearbeitet sind und die Innenfläche die Aussenfläche im Formschluss mechanisch kontaktiert.

Der Formschluss stellt sicher, dass sich die Ferritelemente auch bei hoher Zentrifugalkraft von 20000min⁻¹ und höher nicht vom Rotorkörper lösen. Ein solcher Formschluss ist einfach zu bewerkstelligen und macht die Fertigung des Systems kostengünstig.

In einer bevorzugten Ausführungsform des Systems weist die Rotoreinheit eine Spulenwicklung auf, welche Spulenwicklung radial aussenseitig an den Ferritelementen angebracht ist.

Und auch das Anbringen der Spulenwicklung radial aussenseitig an den Ferritelementen ist einfach zu bewerkstelligen und macht die Fertigung des Systems kostengünstig.

In einer bevorzugten Ausführungsform des Systems sind die Dipolmagnete aus Neodym-Eisen-Bor.

Dipolmagnete aus Neodym-Eisen-Bor sind kostengünstig in der Anschaffung, was auch die Fertigung des Systems kostengünstig macht.

In einer bevorzugten Ausführungsform des Systems weist die Rotoreinheit einen Rotorkörper und eine Nut auf, welche Nut radial aussenseitig im Rotorkörper angebracht ist; und wobei die Dipolmagnete in der Nut befestigt sind.

Eine solche Nut ist einfach im Rotorkörper anzubringen. Die in der Nut befestigten Dipolmagnete kommen damit in weitgehend gleicher radialer Entfernung zur Drehachse wie die Spulenwicklung zu liegen, was es möglich macht, die Dipolmagnete und die Spulenwicklung mit einer einfach gestalteten Rotorabdeckung abzudecken. Somit hilft die Nut die Fertigung des Systems kostengünstig zu machen.

In einer bevorzugten Ausführungsform des Systems weist die Rotoreinheit eine Rotorabdeckung auf, welche Rotorabdeckung radial aussenseitig an der Rotoreinheit befestigt ist.

In einer bevorzugten Ausführungsform des Systems erfolgt die Befestigung der Rotorabdeckung an der Rotoreinheit durch Kraftschluss.

In einer bevorzugten Ausführungsform des Systems ist die Rotorabdeckung auf die Rotoreinheit gespannt.

In einer bevorzugten Ausführungsform des Systems weist die Rotoreinheit eine Spulenwicklung aufweist; und dass die auf die Rotoreinheit gespannte Rotorabdeckung die Spulenwicklung und die Dipolmagnete vollständig abdeckt.

Eine solche Rotorabdeckung schützt die Dipolmagnete und die Spulenwicklung vor mechanischer Beschädigung. Eine solche Rotorabdeckung ist einfach an der Rotoreinheit zu befestigen und macht die Fertigung des Systems kostengünstig.

In einer bevorzugten Ausführungsform des Systems ist die Statoreinheit zur Rotoreinheit entlang der Drehachse mit einer axialen Versatztoleranz von +/-1.0mm angeordnet.

Die axiale Versatztoleranz ist ein axialer Freiheitsgrad bei der Montage der Statoreinheit neben der Rotoreinheit. Im Rahmen der axialen Versatztoleranz wird die Messung der Magnetfelder der Dipolmagnete durch den Magnetfeldsensor nicht beeinträchtigt. Durch den axialen Freiheitsgrad lässt sich die Statoreinheit einfach und rasch neben der Rotoreinheit montieren.

In einer bevorzugten Ausführungsform des Systems erzeugt der Magnetfeldsensor für jedes gemessene Magnetfeld ein Magnetfeldsignal; wobei die Statoreinheit eine Auswerteeinheit aufweist, welche Auswerteeinheit ein Auswerteprogramm ausführt; wobei der Magnetfeldsensor die Magnetfeldsignale an die Auswerteeinheit übermittelt; und wobei das Auswerteprogramm die Magnetfeldsignale zählt und mit dem Abstand der Dipolmagnete zueinander multipliziert, um so den von der Rotoreinheit zurückgelegten Drehwinkel zu ermitteln.

In einer bevorzugten Ausführungsform des Systems erzeugen die Dehnungsmesstreifen für ein erfasstes Drehmoment Messsignale; wobei die Rotoreinheit eine Rotorantenne aufweist; wobei die Dehnungsmessstreifen die Messignale an die Rotorantenne übermitteln; wobei die Statoreinheit eine Statorantenne und eine Auswerteeinheit aufweist, welche Auswerteeinheit ein Auswerteprogramm ausführt; wobei die Rotorantenne die Messsignale an die Statorantenne sendet; wobei die Statorantenne die von der Rotorantenne empfangenen Messsignale an die Auswerteeinheit übermittelt; und wobei das Auswerteprogramm aus den übermittelten Messsignalen das Drehmoment ermittelt, welches auf die Rotoreinheit wirkt.

### Kurze Beschreibung der Figuren

Im Folgenden wird die Erfindung beispielhaft unter Beizug der Figuren näher erklärt. Es zeigen:
- Fig. 1: eine Ansicht eines Teiles eines Systems 1 zur Erfassung von Drehmoment und Drehwinkel mit einer Rotoreinheit 10 und einer Statoreinheit 20;
- Fig. 2: eine Ansicht des Teiles des Systems 1 nach Fig. 1 in einem Schnitt C-C;
- Fig. 3: ein vergrösserter Querschnitt eines Teiles des Systems 1 nach Fig. 2;
- Fig. 4: eine vergrösserte Ansicht eines Teiles der Rotoreinheit 10 nach Fig. 1 und 2; und
- Fig. 5: ein vergrösserter Querschnitt eines Teiles der Rotoreinheit 10 nach Fig. 3 in einem Schnitt D-D.

### Wege zur Ausführung der Erfindung

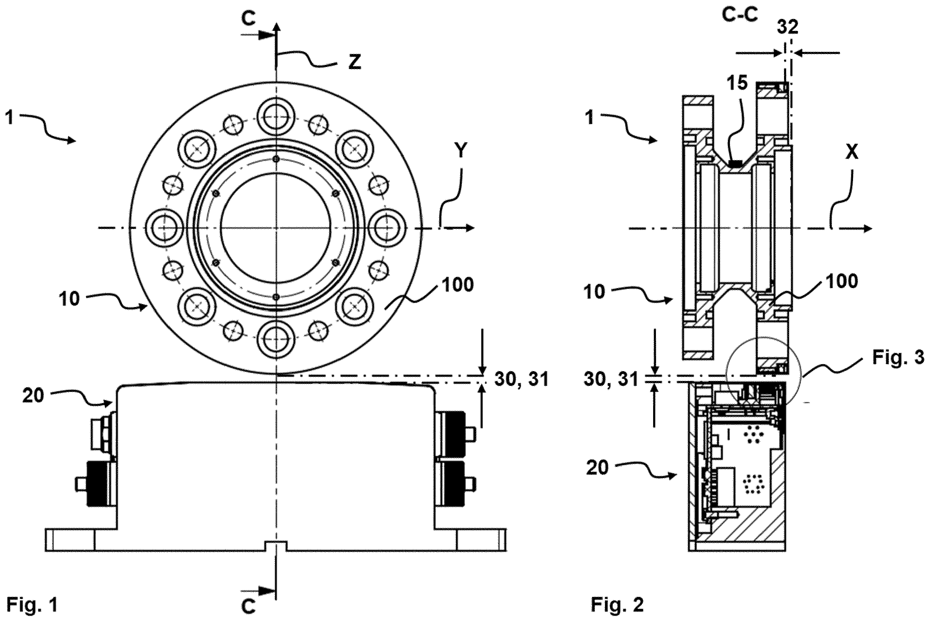

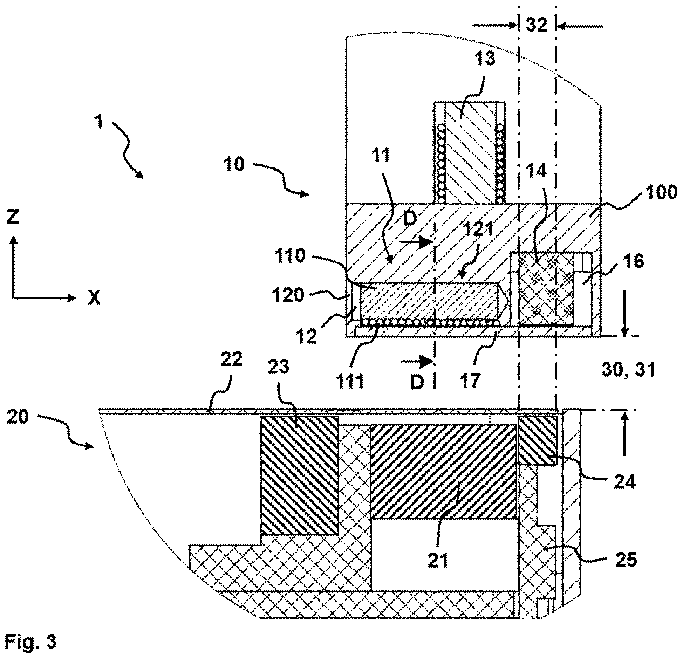

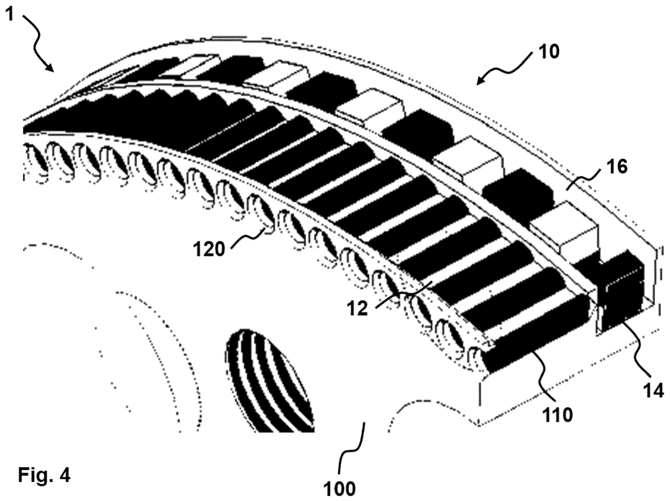

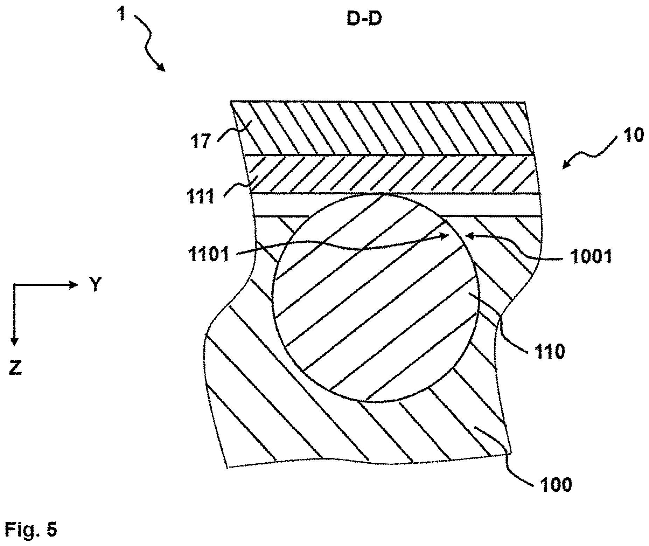

Fig. 1 zeigt eine Ansicht eines Teiles des Systems 1 zur Erfassung von Drehmoment und Drehwinkel. Fig. 2 ist eine Ansicht nach Fig. 1 in einem Schnitt C-C. Fig. 3 ist ein vergrösserter Querschnitt eines Teiles des Systems 1 nach Fig. 2. Fig. 4 ist eine vergrösserte Ansicht eines Teiles der Rotoreinheit 10 nach Fig. 1 und 2. Und Fig. 5 ist ein vergrösserter Querschnitt eines Teiles der Rotoreinheit 10 nach Fig. 3 in einem Schnitt D-D. Gleiche Bezugszeichen bezeichnen gleiche Gegenstände in den Figuren.

Das System 1 ist in einem dreidimensionalen Koordinatensystem mit einer Drehachse X, einer Horizontalachse Y und einer Vertikalachse Z dargestellt. Die drei Achsen stehen senkrecht aufeinander.

Das System 1 weist eine Rotoreinheit 10 und eine Statoreinheit 20 auf.

Die Rotoreinheit 10 weist einen hohlzylinderförmigen Rotorkörper 100 auf. Der Rotorkörper 100 ist aus mechanisch beständigem Werkstoff wie Stahl, Edelstahl, usw. Die Rotoreinheit 10 ist als Flansch ausgeführt und lässt sich über eine Schraubverbindung an beliebigen Drehteilen befestigen. Die Rotoreinheit 10 ist für Umdrehungszahlen von 20000min⁻¹ und höher ausgelegt.

Die Statoreinheit 20 ist ortsfest angeordnet. Sie ist bezüglich der Drehachse X durch einen radialen Luftspalt 30 von der Rotoreinheit 10 getrennt. Der radiale Luftspalt 30 ist grösser/gleich 2.0mm und weist eine radiale Luftspalttoleranz 31 von +/-1.5mm aufweist. Unabhängig davon weist sie entlang der Drehachse X eine axiale Versatztoleranz 32 zur Rotoreinheit 10 auf. Die axiale Versatztoleranz 32 beträgt +/-1.0mm.

Die Rotoreinheit 10 weist Dehnungsmessstreifen 15 auf. Die Dehnungsmessstreifen 15 umfassen ein Messgitter und eine Brückenschaltung. Wenn am Messgitter eine elektrische Spannung angelegt wird, weist das Messgitter einen elektrischen Widerstand auf. Bei Dehnung oder Stauchung des Messgitters ändert sich der elektrische Widerstand, welche Änderung des elektrischen Widerstandes in der Brückenschaltung Messsignale erzeugt. Die Dehnungsmessstreifen 15 erfassen das Drehmoment dynamisch und erzeugen bis zu 10000 Messsignale pro Sekunde bei einer Abtastrate von bis zu 35kSample. Die Messsignale haben eine Auflösung von 24Bit. Die Dehnungsmessstreifen 15 erfassen ein maximales Nenndrehmoment von 100Nm und höher mit einer Genauigkeit von kleiner/gleich 0.05%.

Die Rotoreinheit 10 weit eine Rotorantenne 13 auf und die Statoreinheit 20 weist eine Statorantenne 23 auf. Die Dehnungsmesstreifen 15 und die Rotorantenne 13 sind über elektrische Leitungen elektrisch miteinander verbunden. Die Dehnungsmesstreifen 15 übermitteln die Messsignale über die elektrischen Leitungen an die Rotorantenne 13. Die Messsignale werden von der Rotoreinheit 10 berührungslos an die Statoreinheit 20 übertragen. Dazu sendet die Rotorantenne 13 die Messsignale an die Statorantenne 23. Vorzugsweise wird im Industrial Scientific and Medical (ISM)-Band die Sendefrequenz von 13.56MHz verwendet und eine Datenübermittlungsrate von bis zu 1.4Mbitsec⁻¹ erreicht.

Die Rotoreinheit 10 weist eine Sekundärspule 11 auf und die Statoreinheit 20 weist eine Primärspule 21 auf. Die Primärspule 21 und die Sekundärspule 11 sind induktiv miteinander gekoppelt. Eine elektrische Primärspannung in der Primärspule 21 bewirkt eine elektrische Sekundärspannung in der Sekundärspule 11. Die Statoreinheit 20 versorgt die Rotoreinheit 10 über die induktive Kopplung mit elektrischer Energie. Die induktive Kopplung der Primärspule 21 mit der Sekundärspule 11 ist berührungslos und erfolgt im ISM-Band mit Trägerfrequenzen im Bereich von 115kHz bis 130kHz.

Die Sekundärspule 11 und die Dehnungsmessstreifen 15 sind über elektrische Leitungen elektrisch miteinander verbunden. Die Sekundärspule 11 versorgt die Dehnungsmessstreifen 15 über die elektrischen Leitungen mit elektrischer Energie. Die Sekundärspule 11 und die Rotorantenne 13 sind über elektrische Leitungen elektrisch miteinander verbunden. Die Sekundärspule 11 versorgt die Rotorantenne 13 über die elektrischen Leitungen mit elektrischer Energie.

Die Rotoreinheit 10 weist mehrere Sacklöcher 12 auf. Die Sacklöcher 12 sind radial aussenseitig im Rotorkörper 100 angebracht. Die Sacklöcher 12 sind auf einem Kreisumfang in konstanter radialer Entfernung zur Drehachse X angeordnet. Vorzugsweise weist jedes Sackloch 12 eine Sacklochöffnung 120 auf. Die Sacklochöffnung 120 ist parallel zur Drehachse X im Rotorkörper 100 angebracht. Jedes Sackloch 12 weist eine Sacklochöffnung 120 und einen Innenraum 121 auf. Die Sacklochöffnung 120 ist parallel zur Drehachse X im Rotorkörper 100 angebracht. Der Innenraum 121 ist durch die Sacklochöffnung 120 von ausserhalb des Rotoreinheit 10 zugänglich.

Die Sekundärspule 11 weist mehrere Ferritelemente 110 auf. Die Ferritelemente 110 sind Mangan-Zink-Ferrite, Nickel-Zink-Ferrite, usw. Vorzugsweise sind die Ferritelemente 110 aus dem Werkstoff 3C90. Der Werkstoff 3C90 weist eine magnetische Anfangspermeabilität grösser/gleich 2000, vorzugsweise grösser/gleich 2300 auf. Die magnetische Anfangspermeabilität ist gemäss der Norm DIN IEC 60401 bei Raumtemperatur von 25°C, mit niedriger elektrischer Stromfrequenz kleiner/gleich 10kHz und geringer magnetischer Aussteuerung kleiner 0.25mT bestimmt worden. Die magnetische Anfangspermeabilität weist eine Streuung von +/-20% auf. Der Werkstoff 3C90 weist für Trägerfrequenzen im Bereich von 115kHz bis 130kHz eine geringe Wirbelstromverluste im Bereich von 165kWm⁻³ bis 205kWm⁻³ auf. Der Wirbelstromverlust ist bei Raumtemperatur von 25°C und eine magnetische Aussteuerung von 100mT bestimmt worden. Vorzugsweise sind die Ferritelemente 110 zylinderförmig. Vorzugsweise weist jedes Ferritelement 110 einen Durchmesser von 2.0mm und eine Länge von 7.5mm auf. Vorzugsweise weist die Sekundärspule 10 einhundert Ferritelemente 110 auf. Vorzugsweise beträgt der Abstand der Ferritelemente 12 zueinander 3.7mm.

Die Ferritelemente 11 sind auf dem Kreisumfang der Sacklöcher 12 im konstanten Abstand zueinander angeordnet. Die Ferritelemente 110 sind in den Sacklöchern 12 befestigt. In jedem Sackloch 12 ist ein Ferritelement 110 befestigt. Das Ferritelement 110 lässt durch die Sacklochöffnung 120 in den Innenraum 121 einbringen. Die Befestigung der Ferritelemente 110 in den Sacklöchern 12 erfolgt durch Formschluss wie Einrasten, usw. oder durch Stoffschluss wie Kleben, usw. oder durch Kraftschluss wie Klemmen, usw. oder durch eine beliebige Kombination von Formschluss, Stoffschluss und Kraftschluss. Vorzugsweise weist der Innenraum 121 mindestens eine Innenfläche 1001 auf und das Ferritelement 110 weist mindestens eine Aussenfläche 1101 auf. Die Innenfläche 1001 und die Aussenfläche 1101 sind von der Grösse passend gearbeitet und die Innenfläche 1001 kontaktiert die Aussenfläche 1101 mechanisch im Formschluss. Wenn nun bei Umdrehungszahlen der Rotoreinheit 10 von 20000min⁻¹ und höher eine Zentrifugalkraft auf die Ferritelemente 11 wirkt, kann sich das Ferritelement 11 nicht vom Rotorkörper 100 lösen, da der Formschluss eine Bewegung des Ferritelementes 11 weg vom Rotorkörper 100 verhindert.

Die Rotoreinheit 10 weist eine Spulenwicklung 111 auf. Die Spulenwicklung 111 ist radial aussenseitig an den Ferritelementen 110 angebracht. Die Spulenwicklung 111 ist auf einem Kreisumfang in konstanter radialer Entfernung zur Drehachse X angeordnet. Die Spulenwicklung 111 besteht aus Drähten aus elektrisch leitendem Werkstoff wie Kupfer, usw. Vorteilhafterweise beträgt ein Durchmesser der Drähte 0.4mm.

Die Rotoreinheit 10 weist eine Nut 16 auf. Die Nut 16 ist radial aussenseitig im Rotorkörper 100 angebracht. Die Nut 16 ist auf einem Kreisumfang in konstanter radialer Entfernung zur Drehachse X angeordnet.

Die Rotoreinheit 10 weist mehrere Dipolmagnete 14 mit einer Remanenz von grösser/gleich 1000mT, vorzugsweise grösser/gleich 1400mT auf. Vorzugsweise sind die Dipolmagnete 14 aus Neodym-Eisen-Bor. Vorzugsweise sind die Dipolmagnete 14 in der Nut 16 befestigt. Die Befestigung der Dipolmagnete 14 erfolgt durch Stoffschluss wie Kleben, usw. oder Kraftschluss wie Klemmen, usw. oder aus einer Kombination von Stoffschluss und Kraftschluss. Die Dipolmagnete 14 sind auf dem Kreisumfang der Nut 16 im konstanten Abstand zueinander angeordnet. Vorzugsweise weist die Rotoreinheit 10 zweiundsiebzig Dipolmagnete 14 auf. Vorzugsweise beträgt der Abstand der Dipolmagnete 14 zueinander 5.0mm. Vorzugsweise sind die Dipolmagnete 14 quaderförmig. Vorzugsweise ist jeder Dipolmagnet 14 3.0×3.0×4.0mm³ gross. Jeder Dipolmagnet 14 weist also entlang der Drehachse X eine axiale Länge von 3mm auf. Diese axiale Länge von 3mm ermöglicht einen axialen Freiheitsgrad bei der Montage der Statoreinheit 20 neben der Rotoreinheit 10. Denn der Magnetfeldsensor 24 der Statoreinheit 20 muss so nicht mehr in nächster Nähe zu den Dipolmagneten 14 stehen, sondern hat eine axiale Versatztoleranz 32 von +/-1.0mm, ohne dass die Messung der Magnetfelder der Dipolmagnete 14 durch den Magnetfeldsensor 24 beeinträchtigt wird.

Die Rotoreinheit 10 weist eine Rotorabdeckung 17 auf. Die Rotorabdeckung 17 ist radial aussenseitig an der Rotoreinheit 10 befestigt. Die Befestigung der Rotorabdeckung 17 an der Rotoreinheit 10 erfolgt durch Kraftschluss wie Spannen, usw. Die Rotorabdeckung 17 ist aus einem Werkstoff mit hoher Zugfestigkeit und Steifigkeit wie carbonfaserverstärktem Kunststoff (CFK), glasfaserverstärktem Kunststoff (GFK), usw. Die Rotorabdeckung 17 ist auf einem Kreisumfang in konstanter radialer Entfernung zur Drehachse X angeordnet. Die Rotorabdeckung 17 ist bandförmig. Vorteilhafterweise lässt sich die Rotorabdeckung 17 durch elastische Verformung auf die Rotoreinheit 10 spannen. Vorteilhafterweise deckt die auf die Rotoreinheit 10 gespannte Rotorabdeckung 17 die Spulenwicklung 111 und die Dipolmagnete 14 vollständig ab. Vorteilhafterweise befindet sich ein radial aussenseitiges Ende der Dipolmagneten 14 in weitgehend gleicher radialer Entfernung zur Drehachse X wie radial aussenseitige Enden der Spulenwicklung 111. Somit liegt die auf die Rotoreinheit 10 gespannte Rotorabdeckung 17 radial aussenseitig im direkten mechanischen Kontakt flächig an der Spulenwicklung 111 an und sie liegt im direkten mechanischen Kontakt flächig an den Dipolmagneten 14 an. Die Rotorabdeckung 17 schützt die Spulenwicklung 111 und die Dipolmagneten 14 vor mechanischer Beschädigung.

Die Statoreinheit 20 weist einen Magnetfeldsensor 24 auf, welcher bei sich drehender Rotoreinheit 10 die Magnetfelder der Dipolmagnete 14 misst. Der Magnetfeldsensor 24 ist ein Hall-Sensor, ein Magnetoresistiv-Sensor, usw. Der Magnetfeldsensor 24 erzeugt für jedes gemessene Magnetfeld ein Magnetfeldsignal. Vorzugsweise ist das Magnetfeldsignal ein digitales Signal.

Die Statoreinheit 20 weist eine Auswerteeinheit 25 auf. Die Auswerteeinheit 25 ist eine elektrische Schaltung mit mindestens einem Datenprozessor und mindestens einem Datenspeicher. Die Auswerteeinheit 25 weist mindestens ein Auswerteprogramm auf. Das Auswerteprogramm ist im Datenspeicher gespeichert und aus dem Datenspeicher in den Datenprozessor ladbar. Die Auswerteeinheit 25 führt das in den Datenprozessor geladene Auswerteprogramm aus.

Die Statorantenne 23 und die Auswerteeinheit 25 sind über elektrische Leitungen elektrisch miteinander verbunden. Die Statorantenne 23 übermittelt die von der Rotorantenne 13 empfangenen Messsignale über die elektrischen Leitungen an die Auswerteeinheit 25. Das in den Datenprozessor geladene Auswerteprogramm ermittelt aus den übermittelten Messsignalen das Drehmoment, welches auf die Rotoreinheit 10 wirkt.

Der Magnetfeldsensor 24 und die Auswerteeinheit 25 sind über elektrische Leitungen elektrisch miteinander verbunden. Der Magnetfeldsensor 24 übermittelt die Magnetfeldsignale über die elektrischen Leitungen an die Auswerteeinheit 25. Das in den Datenprozessor geladene Auswerteprogramm zählt die übermittelten Magnetfeldsignale. Der Wert des Abstandes der Dipolmagnete 14 zueinander ist im Datenspeicher gespeichert. Das in den Datenprozessor geladene Auswerteprogramm liest den Wert des Abstandes der Dipolmagnete 14 zueinander aus dem Datenspeicher und multipliziert ihn mit der Anzahl der gezählten Magnetfeldsignale und ermittelt so den von der Rotoreinheit 10 zurückgelegten Drehwinkel.

Das System 1 lässt sich in der industriellen Messtechnik vielfältig verwenden. So lassen sich in der Prüfstandstechnik mit dem System 1 das Drehmoment und der Drehwinkel erfassen. Aber auch bei der spanenden Bearbeitung von Werkstücken lassen sich mit dem System 1 das Drehmoment und der Drehwinkel an sich drehenden Teilen erfassen.

### Bezugszeichenliste

- 1: System
- 10: Rotoreinheit
- 11: Sekundärspule
- 100: Rotorkörper
- 1001: Innenfläche
- 110: Ferritelement
- 111: Spulenwicklung
- 1101: Aussenfläche
- 12: Sackloch
- 120: Sacklochöffnung
- 121: Innenraum
- 13: Rotorantenne
- 14: Dipolmagnet
- 15: Dehnungsmessstreifen
- 16: Nut
- 17: Rotorabdeckung
- 20: Statoreinheit
- 21: Primärspule
- 22: Statorabdeckung
- 23: Statorantenne
- 24: Magnetfeldsensor
- 25: Auswerteeinheit
- 30: radialer Luftspalt
- 31: radiale Luftspalttoleranz
- 32: axiale Versatztoleranz
- C-C: Schnitt
- D-D: Schnitt
- X: Drehachse
- Y: Horizontalachse
- Z: Vertikalachse

## Patentansprüche

1. System (1) zur Erfassung von Drehmoment und Drehwinkel; mit einer Rotoreinheit (10), welche um eine Drehachse (X) drehbar ist; mit einer Statoreinheit (20), welche ortsfest angeordnet ist und durch einen bezüglich der Drehachse (X) radialen Luftspalt (30) von der Rotoreinheit (10) getrennt ist; wobei die Rotoreinheit (10) Dehnungsmessstreifen (15) aufweist, welche ein Drehmoment erfassen, welches auf die Rotoreinheit (10 wirkt; wobei die Rotoreinheit (10) mehrere Dipolmagnete (14) aufweist, welche zueinander beabstandet angeordnet sind; wobei die Statoreinheit (20) einen Magnetfeldsensor (24) aufweist, welcher bei sich drehender Rotoreinheit (10) Magnetfelder der Dipolmagnete (14) misst; wobei die Statoreinheit (20) eine Primärspule (21) und die Rotoreinheit (10) eine Sekundärspule (21) aufweist; und wobei eine elektrische Primärspannung in der Primärspule (21) eine elektrische Sekundärspannung in der Sekundärspule (11) bewirkt; **dadurch gekennzeichnet, dass** jeder der Dipolmagnete (14) eine Remanenz grösser/gleich 1000mT, vorzugsweise grösser/gleich 1400mT aufweist; und dass die Sekundärspule (11) mehrere Ferritelemente (110) aufweist.

2. System (1) nach Anspruch 1, **dadurch gekennzeichnet, dass** der radiale Luftspalt (30) grösser/gleich 2.0mm ist und eine radiale Luftspalttoleranz (31) von +/-1.5mm aufweist.

3. System (1) nach einem der Ansprüche 1 oder 2, **dadurch gekennzeichnet, dass** die Rotoreinheit (10) einen Rotorkörper (100) und mehrere Sacklöcher (12) aufweist, welche Sacklöcher (12) aussenseitig am Rotorkörper (100) angebracht sind; und dass die Ferritelemente (110) in den Sacklöchern (12) befestigt sind.

4. System (1) nach Anspruch 3, **dadurch gekennzeichnet, dass** die Befestigung der Ferritelemente (110) in den Sacklöchern (12) durch Formschluss erfolgt.

5. System (1) nach Anspruch 4, **dadurch gekennzeichnet, dass** jedes Sackloch (12) einen Innenraum (121) aufweist, welcher Innenraum (121) mindestens eine Innenfläche (1001) aufweist; dass jedes Ferritelement (110) mindestens eine Aussenfläche (1101) aufweist; und dass die Innenfläche (1001) und die Aussenfläche (1101) von der Grösse passend gearbeitet sind und die Innenfläche (1001) die Aussenfläche (1101) im Formschluss mechanisch kontaktiert.

6. System (1) nach einem der Ansprüche 1 bis 5, **dadurch gekennzeichnet, dass** die Rotoreinheit (10) eine Spulenwicklung (111) aufweist, welche Spulenwicklung (111) radial aussenseitig an den Ferritelementen (110) angebracht ist.

7. System (1) nach einem der Ansprüche 1 bis 6, **dadurch gekennzeichnet, dass** die Dipolmagnete (14) aus Neodym-Eisen-Bor sind.

8. System (1) nach einem der Ansprüche 1 bis 7, **dadurch gekennzeichnet, dass** die Rotoreinheit (10) einen Rotorkörper (100) und eine Nut (16) aufweist, welche Nut (16) radial aussenseitig im Rotorkörper (100) angebracht ist; und dass die Dipolmagnete (14) in der Nut (16) befestigt sind.

9. System (1) nach einem der Ansprüche 1 bis 8, **dadurch gekennzeichnet, dass** die Rotoreinheit (10) eine Rotorabdeckung (17) aufweist, welche Rotorabdeckung (17) radial aussenseitig an der Rotoreinheit (10) befestigt ist.

10. System (1) nach Anspruch 9, **dadurch gekennzeichnet, dass** die Befestigung der Rotorabdeckung (17) an der Rotoreinheit (10) durch Kraftschluss erfolgt.

11. System (1) nach einem der Ansprüche 9 oder 10, **dadurch gekennzeichnet, dass** die Rotorabdeckung (17) auf die Rotoreinheit (10) gespannt ist.

12. System (1) nach Anspruch 11, **dadurch gekennzeichnet, dass** die Rotoreinheit (10) eine Spulenwicklung (111) aufweist; und dass die auf die Rotoreinheit (10) gespannte Rotorabdeckung (17) die Spulenwicklung (111) und die Dipolmagnete (14) vollständig abdeckt.

13. System (1) nach einem der Ansprüche 1 bis 12, **dadurch gekennzeichnet, dass** die Statoreinheit (20) zur Rotoreinheit (10) entlang der Drehachse (X) mit einer axialen Versatztoleranz (32) von +/-1.0mm angeordnet ist.

14. System (1) nach einem der Ansprüche 1 bis 13, **dadurch gekennzeichnet, dass** der Magnetfeldsensor (24) für jedes gemessene Magnetfeld ein Magnetfeldsignal erzeugt; dass die Statoreinheit (20) eine Auswerteeinheit (25) aufweist, welche Auswerteeinheit (25) ein Auswerteprogramm ausführt; dass der Magnetfeldsensor (24) die Magnetfeldsignale an die Auswerteeinheit (25) übermittelt; und dass das Auswerteprogramm die Magnetfeldsignale zählt und mit dem Abstand der Dipolmagnete (14) zueinander multipliziert, um so den von der Rotoreinheit (10) zurückgelegten Drehwinkel zu ermitteln.

15. System (1) nach einem der Ansprüche 1 bis 14, **dadurch gekennzeichnet, dass** die Dehnungsmesstreifen (15) für ein erfasstes Drehmoment Messsignale erzeugen; dass die Rotoreinheit (10) eine Rotorantenne (13) aufweist; dass die Dehnungsmessstreifen (15) die Messignale an die Rotorantenne (13) übermitteln; dass die Statoreinheit (20) eine Statorantenne (23) und eine Auswerteeinheit (25) aufweist, welche Auswerteeinheit (25) ein Auswerteprogramm ausführt; dass die Rotorantenne (13) die Messsignale an die Statorantenne (23) sendet; dass die Statorantenne (23) die von der Rotorantenne (13) empfangenen Messsignale an die Auswerteeinheit (25) übermittelt; und dass das Auswerteprogramm aus den übermittelten Messsignalen das Drehmoment ermittelt, welches auf die Rotoreinheit (10) wirkt.

## Claims

1. A torque and angle of rotation detection system (1) comprising a rotor unit (10) that is able to rotate about an axis of rotation (X); comprising a stator unit (20) arranged in a stationary manner and separated from the rotor unit (10) by an air gap (30) arranged radially with respect to the axis of rotation (X); wherein the rotor unit (10) comprises strain gauges (15) which detect a torque acting onto the rotor unit (10); wherein the rotor unit (10) comprises a plurality of dipole magnets (14) arranged spaced apart from each other; wherein the stator unit (20) comprises a magnetic field sensor (24) that measures magnetic fields of the dipole magnets (14) during rotation of the rotor unit (10); wherein the stator unit (20) comprises a primary coil (21) and the rotor unit (10) comprises a secondary coil (21); and wherein a primary electrical voltage in the primary coil (21) generates a secondary electrical voltage in the secondary coil (11); **characterized in that** each of the dipole magnets (14) has a remanence of more than/equal to 1000mT, preferably of more than/equal to 1400mT; and **in that** the secondary coil (11) comprises a plurality of ferrite elements (110).

2. The system (1) according to claim 1, **characterized in that** the width of the radial air gap (30) is greater than/equal to 2.0mm and a radial air gap tolerance (31) is in the range of +/-1.5mm.

3. The system (1) according to any of the claims 1 or 2, **characterized in that** the rotor unit (10) comprises a rotor body (100) and a plurality of blind holes (12), which blind holes (12) are provided on the outside of the rotor body (100); and **in that** the ferrite elements (110) are secured in the blind holes (12).

4. The system (1) according to claim 3, **characterized in that** securing of the ferrite elements (110) in the blind holes (12) is achieved by a form-locking connection.

5. The system (1) according to claim 4, **characterized in that** each blind hole (12) comprises an interior space (121), which interior space (121) comprises at least one inner surface (1001); **in that** each ferrite element (110) comprises at least one outer surface (1101); and **in that** the inner surface (1001) and the outer surface (1101) are machined to match each other in size and a mechanical contact of the inner surface (1001) and the outer surface (1101) results in a form-locking connection.

6. The system (1) according to any of the claims 1 to 5, **characterized in that** the rotor unit (10) comprises a coil winding (111), which coil winding (111) is attached radially to the outside of the ferrite elements (110).

7. The system (1) according to any of the claims 1 to 6, **characterized in that** the dipole magnets (14) are made of neodymium-iron-boron.

8. The system (1) according to any of the claims 1 to 7, **characterized in that** the rotor unit (10) comprises a rotor body (100) and a groove (16), which groove (16) is provided radially in the outside of the rotor body (100); and **in that** the dipole magnets (14) are secured within the groove (16).

9. The system (1) according to any of the claims 1 to 8, **characterized in that** the rotor unit (10) comprises a rotor cover (17), which rotor cover (17) is attached radially to the outside of the rotor unit (10).

10. The system (1) according to claim 9, **characterized in that** the rotor cover (17) is secured at the rotor unit (10) by a force-locking connection.

11. The system (1) according to any of the claims 9 or 10, **characterized in that** the rotor cover (17) is clamped onto the rotor unit (10).

12. The system (1) according to claim 11, **characterized in that** the rotor unit (10) comprises a coil winding (111); and **in that** the rotor cover (17) clamped onto the rotor unit (10) completely covers the coil winding (111) and the dipole magnets (14).

13. The system (1) according to any of the claims 1 to 12, **characterized in that** the stator unit (20) is arranged with an axial offset tolerance (32) in the range of +/-1.0mm relative to the rotor unit (10) along the axis of rotation (X) .

14. The system (1) according to any of the claims 1 to 13, **characterized in that** the magnetic field sensor (24) generates a magnetic field signal for each magnetic field measured; **in that** the stator unit (20) comprises an evaluation unit (25), which evaluation unit (25) executes an evaluation program; **in that** the magnetic field sensor (24) transmits the magnetic field signals to the evaluation unit (25); and **in that** the evaluation program counts the magnetic field signals which it multiplies by the distance between the dipole magnets (14) in order to determine the angle of rotation traveled by the rotor unit (10).

15. The system (1) according to any of the claims 1 to 14, **characterized in that** the strain gauges (15) generate measurement signals for a detected torque; **in that** the rotor unit (10) comprises a rotor antenna (13); **in that** the strain gauges (15) transmit the measurement signals to the rotor antenna (13); **in that** the stator unit (20) comprises a stator antenna (23) and an evaluation unit (25), which evaluation unit (25) executes an evaluation program; **in that** the rotor antenna (13) sends the measurement signals to the stator antenna (23); **in that** the stator antenna (23) transmits the measurement signals received from the rotor antenna (13) to the evaluation unit (25); and **in that** the evaluation program determines the torque that acts onto the rotor unit (10) from the measurement signals transmitted.

## Revendications

1. Système de détection de couple et d'angle de rotation (1) comprenant une unité de rotor (10) qui peut tourner autour d'un axe de rotation (X) ; comprenant une unité de stator (20) disposée de manière stationnaire et séparée de l'unité de rotor (10) par un entrefer (30) s'étendant radialement à l'axe de rotation (X) ; dans lequel l'unité de rotor (10) comprend des jauges de contrainte (15) détectant un couple agissant sur l'unité de rotor (10) ; dans lequel l'unité de rotor (10) comprend une pluralité d'aimants dipolaires (14) disposés à distance les uns des autres ; dans lequel l'unité de stator (20) comprend un capteur de champ magnétique (24) mesurant les champs magnétiques des aimants dipôles (14) lorsque l'unité de rotor (10) tourne ; dans lequel l'unité de stator (20) comprend une bobine primaire (21) et l'unité de rotor (10) comprend une bobine secondaire (21) ; et dans lequel une tension électrique primaire dans la bobine primaire (21) génère une tension électrique secondaire dans la bobine secondaire (11) ; **caractérisé en ce que** chacun des aimants dipôles (14) a une rémanence supérieure/égale à 1000mT, de préférence supérieure/égale à 1400mT ; et **en ce que** la bobine secondaire (11) comprend une pluralité d'éléments en ferrite (110).

2. Système (1) selon la revendication 1, **caractérisé en ce que** l'entrefer radial (30) a une largeur supérieure/égale à 2,0 mm et **en ce que** l'entrefer radial (31) a une tolérance de l'ordre de +/-1,5mm.

3. Système (1) selon l'une quelconque des revendications 1 ou 2, **caractérisé en ce que** l'unité de rotor (10) comprend un corps de rotor (100) et une pluralité de trous borgnes (12), ces trous borgnes (12) étant situés à l'extérieur du corps de rotor (100) ; et **en ce que** les éléments en ferrite (110) sont fixés dans les trous borgnes (12).

4. Système (1) selon la revendication 3, **caractérisé en ce que** ladite fixation des éléments en ferrite (110) dans les trous borgnes (12) est réalisée par une liaison à complémentarité de forme.

5. Système (1) selon la revendication 4, **caractérisé en ce que** chaque trou borgne (12) comprend un espace intérieur (121), lequel espace intérieur (121) comprend au moins une surface intérieure (1001) ; **en ce que** chaque élément en ferrite (110) comprend au moins une surface extérieure (1101) ; et **en ce que** ladite surface intérieure (1001) et ladite surface extérieure (1101) sont fabriquées de manière à s'adapter l'une à l'autre en taille et ladite surface intérieure (1001) et ladite surface extérieure (1101) sont en contact mécanique l'une avec l'autre par complémentarité de forme.

6. Système (1) selon l'une quelconque des revendications 1 à 5, **caractérisé en ce que** l'unité de rotor (10) comprend un enroulement de bobine (111), lequel enroulement de bobine (111) est fixé radialement à l'extérieur des éléments en ferrite (110) .

7. Système (1) selon l'une quelconque des revendications 1 à 6, **caractérisé en ce que** les aimants dipolaires (14) sont en néodyme-fer-bore.

8. Système (1) selon l'une quelconque des revendications 1 à 7, **caractérisé en ce que** l'unité de rotor (10) comprend un corps de rotor (100) et une rainure (16), laquelle rainure (16) est prévue radialement à l'extérieur du corps de rotor (100) ; et **en ce que** les aimants dipolaires (14) sont fixés dans ladite rainure (16).

9. Système (1) selon l'une quelconque des revendications 1 à 8, **caractérisé en ce que** l'unité de rotor (10) comprend un couvercle de rotor (17), lequel couvercle de rotor (17) est fixé radialement à l'extérieur de l'unité de rotor (10).

10. Système (1) selon la revendication 9, **caractérisé en ce que** le couvercle du rotor (17) est fixé à l'unité de rotor (10) par une liaison de force.

11. Système (1) selon l'une des revendications 9 ou 10, **caractérisé en ce que** le couvercle du rotor (17) est serré sur l'unité de rotor (10).

12. Système (1) selon la revendication 11, **caractérisé en ce que** l'unité de rotor (10) comprend un enroulement de bobine (111) ; et **en ce que** le couvercle de rotor (17) serré sur l'unité de rotor (10) recouvre complètement l'enroulement de bobine (111) et les aimants dipolaires (14).

13. Système (1) selon l'une quelconque des revendications 1 à 12, **caractérisé en ce que** l'unité de stator (20) est disposée par rapport à l'unité de rotor (10) le long de l'axe de rotation (X) avec une tolérance de décalage axial (32) de l'ordre de +/-1,0 mm.

14. Système (1) selon l'une quelconque des revendications 1 à 13, **caractérisé en ce que** le capteur de champ magnétique (24) génère un signal de champ magnétique pour chaque champ magnétique mesuré ; **en ce que** l'unité de stator (20) comprend une unité d'évaluation (25), **en ce que** laquelle unité d'évaluation (25) exécute un programme d'évaluation ; **en ce que** le capteur de champ magnétique (24) transmet les signaux de champ magnétique à l'unité d'évaluation (25) ; et **en ce que** le programme d'évaluation compte les signaux de champ magnétique et les multiplie par la distance entre les aimants dipôles (14) afin de déterminer l'angle de rotation parcouru par l'unité de rotor (10).

15. Système (1) selon l'une quelconque des revendications 1 à 14, **caractérisé en ce que** les jauges de contrainte (15) génèrent des signaux de mesure pour un couple détecté ; **en ce que** l'unité de rotor (10) comprend une antenne de rotor (13) ; **en ce que** les jauges de contrainte (15) transmettent les signaux de mesure à l'antenne de rotor (13) ; **en ce que** l'unité de stator (20) comprend une antenne de stator (23) et une unité d'évaluation (25), laquelle unité d'évaluation (25) exécute un programme d'évaluation ; **en ce que** l'antenne du rotor (13) transmet les signaux de mesure à l'antenne du stator (23) ; **en ce que** l'antenne du stator (23) transmet les signaux de mesure reçus de l'antenne du rotor (13) à l'unité d'évaluation (25) ; et **en ce que** le programme d'évaluation détermine le couple qui agit sur l'unité du rotor (10) à partir des signaux de mesure transmises.
